# EUROPÄISCHE PATENTSCHRIFT

(11) **EP 1 284 343 B1**
(45) Veröffentlichungstag und Bekanntmachung des Hinweises auf die Patenterteilung: **30.07.2008**
(21) Anmeldenummer: 02018312.5
(22) Anmeldetag: 14.08.2002
(51) Int. Cl.: F01P 5/02, F04D 29/42, F28D 1/04

(54) **Kraftfahrzeug-Kühlsystem und entsprechendes Kraftfahrzeug**
Cooling system for a motor vehicle and related motor vehicle
Système de refroidissement pour un véhicule automobile et véhicule automobile correspondant

(30) Priorität: 17.08.2001 DE 10141156; 25.05.2002 DE 10223386
(43) Veröffentlichungstag der Anmeldung: 19.02.2003
(73) Patentinhaber: Behr GmbH & Co. KG, 70469 Stuttgart (DE)
(72) Erfinder: Banzhaf, Matthias, Dipl.-Ing., 74074 Heilbronn (DE); Kramer, Wolfgang, Dr.-Ing., 71384 Waiblingen-Endersbach (DE); Kull, Reinhard, 71642 Ludwigsburg (DE); Pantow, Eberhard, Dr., 71696 Möglingen (DE); Reeb, Wolfgang, Dipl.-Ing., 72631 Aichtal (DE); Tillmann, Annegret, 73732 Esslingen (DE)
(74) Vertreter: Grosse, Rainer

(56) Entgegenhaltungen:
- DE-C- 887 917
- DE-C- 2 937 005
- GB-A- 1 207 301
- US-A- 4 202 296
- US-A- 5 660 149
- US-A- 6 164 909
- US-B1- 6 178 929
- US-B1- 6 216 458
- US-B1- 6 401 801

## Beschreibung

Die Erfindung betrifft ein Krafifahrzeug-Kohlsystem eines Verbrennungsmotors gemäß Oberbegriff des Anspruchs 1. Ferner betrifft die Erfindung ein Kraftfahrzeug mit einem entsprechenden Kühlsystem.

Kraftfahrzeug-Kühlsysteme der eingangs genannten Art sind bereits bekannt. Sie enthalten häufig einen Axiallüfter, der zur Erzielung einer gewünschten Kühlluftdurchsetzung eines Ladeluftkühlers und eines Kühlmittelkühlers vorgesehen ist. Dabei wird von einem Turbolader zugeführte Ladeluft im Ladeluftkühler gekühlt und anschließend in einen Verbrennungsmotor, beispielsweise einen Turbodieselmotor, geleitet. Im Kühlmittelkühler wird vom Verbrennungsmotor zugeführtes Kühlmittel gekühlt und anschließend in den Verbrennungsmotor rückgeführt, vorzugsweise unter Ausbildung eines geschlossenen Kühlmittelkreislaufs. Sowohl die Ladeluft- als auch die Kühlmittelkühlung erfolgt mittels Kühlluftdurchsetzung der entsprechenden Kühlaggregate (Ladeluftkühler, Kühlmittelkühler), wobei der Axiallüfter in Kühlluftströmungsrichtung gesehen hinter den in Reihe angeordneten Aggregaten und vor dem Verbrennungsmotor zwischengeschaltet ist. Dabei wird mittels des Axiallüfters die Kühlluft derart angesaugt, dass sie in der Regel zunächst den Ladeluftkühler durchsetzt, anschließend durch den Kühlmittelkühler geleitet wird und schließlich auf der Druckseite des Axiallüfters wenigstens teilweise in Richtung Motorgehäuse (Motorblock des Verbrennungsmotors) abströmt. Die Kühlaggregate (Ladeluftkühler, Kühlmittelkühler) sind somit in Kühlluftströmungsrichtung gesehen hintereinander angeordnet und in der Regel als Kreuzstromkühler ausgebildet. Darüber hinaus sind diese Kühlaggregate vor der Motorgehäusefrontseite des entsprechenden Kraftfahrzeugs -unter Zwischenschaltung des Axiallüfters- und somit in der Regel auch an der Fahrzeugfrontseite angeordnet.

Da die Leistungsanforderungen an Verbrennungsmotoren sowohl von Personenkraftwagen als auch von Lastkraftwagen ständig steigen, ist auch ein entsprechend leistungsfähigeres Kühlsystem im Kraftfahrzeug vorzusehen. Dabei ist gleichzeitig zu berücksichtigen, dass der Bauraumbedarf eines leistungszusteigemden Kühlsystems nicht beliebig erweitert werden kann, sondern eher in Abhängigkeit der jeweiligen Verbrennungsmotorausbildung konstruktiven Raumbeschränkungen unterliegt. Die bekannten Kraftfahrzeug-Kühlsysteme sind nachteilig, da sie einen nicht zufriedenstellenden Wirkungsgrad aufweisen und/oder nicht im zur Verfügung stehenden beziehungsweise vorgesehenen Kraftfahrzeug-Bauraum einbaubar sind unter gleichzeitiger Erfüllung der erforderlichen Kühlleistungen.

Aus der GB 1 207 301 A geht ein Lüfter für ein Kraftfahrzeug-Kühlsystem hervor, der als Radiallüfter ausgebildet und einem Kühlmittelkühler eines Verbrennungsmotors zugeordnet ist. Der Radiallüfter weist außerdem ein als Spiralgehäuse ausgebildetes Luftführungsgehäuse auf.

Es ist Aufgabe der Erfindung, ein Kraftfahrzeug-Kühlsystem der eingangs genannten Art zu schaffen, das sich durch einen im Vergleich zu konventionellen Kühlsystemen verbesserten Wirkungsgrad auszeichnet und gleichzeitig flexibel an konstruktive und kraftfahrzeugspezifische Einbauvorgaben anpassbar ist.

Zur Lösung der Aufgabe wird ein Kraftfahrzeug-Kühlsystem mit den Merkmalen des Anspruchs 1 vorgeschlagen, das sich dadurch auszeichnet, dass mindestens ein zusätzlicher Kühler ein als Gegenstromkühler ausgebildeter Ladeluftkühler ist, und dass der Radiallüfter frontal vor dem Verbrennungsmotor des Kraftfahrzeugs und der Kühlmittelkühler und der Ladeluftkühler an einer jeweiligen lateralen Seite des Verbrennungsmotors angeordnet sind, wobei der Radiallüfter mittels eines jeweiligen Austrittskanals mit dem Kühlmittelkühler und dem Ladeluftkühler verbunden ist. Radiallüfter zeichnen sich durch einen verhältnismäßig guten statischen Wirkungsgrad von 70 % bis 75 % aus, während der Wirkungsgrad von guten Axiallüftern lediglich 45 % bis 50 % beträgt. Während Axiallüfter üblicherweise bei einem verhältnismäßig niedrigen Betriebsdruck und hohem Volumenstrom betrieben werden, arbeiten Radiallüfter bei relativ hohen Betriebsdrücken und niedrigeren Volumenströmen. Ferner erlaubt der Radiallüfter aufgrund der (strömungsgünstigen) radialen Umlenkung der selbigen durchsetzenden Kühlluft eine konstruktiv an die jeweilige Ausbildung des Verbrennungsmotors beziehungsweise des Kraftfahrzeugs angepasste räumliche Anordnung der jeweiligen Aggregate des Kühlsystems. Im Gegensatz hierzu ist bei einem Axiallüfter eine Anordnung aller Kühlaggregate (beispielsweise Kühlmittelkühler, Ladeluftkühler) im Wesentlichen entlang einer Achse (Ansaugrichtung des Axiallüfters) vorgesehen. Der Radiallüfter mit Spiralgehäuse zeichnet sich durch einen besonders günstigen Wirkungsgrad aus und erlaubt gleichzeitig die Erzielung der oben erwähnten Vorteile. Der als Gegenstromkühler ausgebildeter Ladeluftkühler zeichnet sich durch eine bessere Kühlluftnutzung aus im Vergleich zu einem Kreuzstromkühler. Dabei ist der Kühlluftmengenbedarf aufgrund der guten Kühlluftausnutzung beim Gegenstromprinzip relativ gering. Der frontal vor dem Verbrennungsmotor eines Kraftfahrzeugs angeordnete Radiallüfter ermöglicht eine verhältnismäßig flexible und konstruktiv retativ einfache räumliche Anordnung der weiteren Aggregate des Kühlsystems in einem Motorraum. Die Austrittskanäle sind vorzugsweise als strömungsgünstige Kühlluftleitungen ausgebildet. Hierdurch wird eine flexible Anpassung der Kühlaggregatanordnung im Kraftfahrzeug an den jeweils zur Verfügung stehenden Einbauraum möglich, bei gleichzeitiger Gewährleistung relativ geringer Lüfterantriebsleistungen. Ferner wird mittels einer derartigen Anordnung der Kühlaggregate ein relativ geringes frontales Einbauvolumen im Motorraum des Kraftfahrzeugs durch das Kühlsystem belegt, so dass mehr Raum für einen insbesondere leistungsstärkeren Verbrennungsmotor im Motorraum zur Verfügung steht unter gleichzeitiger Gewährleistung eines effektiven Kühlsystems. Dabei können die radial aus dem Radiallüfter austretenden Kühlluftteilströme in jeweils strömungsgünstiger Weise zu den Kühlaggregaten geführt werden.

Gemäß einer bevorzugten Ausführungsform kann aber auch mindestens ein Kühler zusätzlich ein Ölkühler, ein Kondensator einer Klimaanlage und/oder ein anderes Kühlaggregat (beispielsweise ein Abgasrückführungskühler) sein. Der Ladeluftkühler kann dabei zum Beispiel als ein Ladeluft/Luft-Kühler oder als ein Ladeluft/Kühlmittel-Kühler ausgebildet sein. Ferner kann der Kühlmittelkühler ein Hochtemperatur- oder ein Niedertemperatur-Kühler sein. Im Falle mehrerer, an der Austrittsseite des Radialverdichters angeordneter und zu kühlender Aggregate (Kühler) kann der Radiallüfter einen einzigen Kühlluftaustritt aufweisen, an welchen ein zur differenzierten Kühlluftbeaufschlagung geeignet ausgebildetes und mit den Aggregaten verbundenes Kühlluftführungssystem angeschlossen ist, oder es können auch mehrere Kühlluftaustritte am Radiallüfter vorgesehen sein, welche mit einem jeweiligen, zugehörigen Aggregat in Verbindung stehen. Eine eventuell erforderliche Kühlluftaufteilung kann in an sich bekannter Weise mittels Einsatz von geeigneten Funktionselementen, wie beispielsweise von Klappen, Ventilen, Schiebern, Blenden oder ähnlichem, erzielt werden.

Mit Vorteil sind mindestens zwei Kühler zueinander in Reihe geschaltet unter Zwischenschaltung des Radiallüfters. Alternativ oder zusätzlich können auch mindestens zwei Kühler zueinander parallel geschaltet sein. Der Einsatz eines Radiallüfters erlaubt eine vorteilhafte Vielfalt an Anordnungsmöglichkeiten von gegebenenfalls verschiedenartigen Kühlern. Dabei kann mindestens ein Kühler, insbesondere ein Kühlmittelkühler, an der Austrittsseite des Radiallüfters angeordnet sein. Ferner ist es zusätzlich möglich, mindestens einen Kühler oberhalb oder unterhalb des Verbrennungsmotors eines Kraftfahrzeugs anzuordnen. Im Falle mehrerer Kühler können selbige nur an einer einzigen Seite oder gegebenenfalls auch an mehreren unterschiedlichen Seiten (laterale, obere und/oder untere Seite) des Verbrennungsmotors angeordnet werden.

Mit Vorteil sind der Kühlmittelkühler und der Ladeluftkühler zueinander parallel geschaltet an der Austrittsseite des Radiallüfters angeordnet. Da die Kühlaggregate an der Austrittsseite des Radiallüfters und nicht wie beim konventionellen Kühlsystem vor dem Lüfter angeordnet werden können, wird ein verhältnismäßig kalter Kühlluftstrom mittels des Radiallüfters angesaugt.

Dies führt dazu, dass bei einem angenommenen konstanten Volumenstrom der den Radiallüfter durchsetzenden Kühlluft ein relativ hoher Massenstrom derselben an die Kühlaggregate weitergeleitet werden kann, so dass aufgrund der erhöhten Förderleistungen an Kühlluft eine entsprechend betriebsgünstigere (in Bezug auf Lüfterdrehzahl beziehungsweise Lüfterraddurchmesser) Kühlleistung des Kühlsystems im Kraftfahrzeug realisierbar ist. Außerdem nimmt der Förderdruck des Radiallüfters mit höherer Luftdichte (kalte Luft) zu. Dadurch steigt sogar der Volumenstrom. Bei einer Anordnung der Kühlaggregate an der Eintrittsseite eines Axiallüfters (konventionelles Kühlsystem) wird dagegen bereits durch die Kühlaggregate erwärmte Kühlluft mittels des Axiallüfters angesaugt, so dass bei einem angenommenen konstanten Volumenstrom relativ niedrige Massenströme an Kühlluft den Axiallüfter durchsetzen und somit auch entsprechend niedrige Kühlleistungen mittels der Kühlaggregate erzielbar sind. Darüber hinaus eignet sich ein Radiallüfter besonders zur strömungsgünstigen Aufteilung des selbigen durchsetzenden Kühlluftstroms in zwei Kühlluftteilströme zur getrennten Beaufschlagung der zueinander parallel an der Austrittsseite des Radiallüfters angeordneten Kühlaggregate (Kühlmittelkühler, Ladeluftkühler). Aufgrund der parallelen Anordnung der zwei Kühlaggregate werden beide jeweils mit verhältnismäßig kalter beziehungsweise nicht vorgewärmter Kühlluft unabhängig voneinander beaufschlagt.

Der Kühlmittelkühler kann als Gegenstromkühler, als Kreuzstromkühler oder als Kreuzgegenstromkühler ausgebildet sein. Aufgrund der flexibel gestaltbaren Kühlluftstromführung kann eine strömungsgünstige und somit auch wirkungsgradgünstige Verbindung des Radiallüfters mit verschiedenartig ausgebildeten Kühlaggregaten realisiert werden. Auch kann der Ladeluftkühler als Kreuzgegenstromkühler ausgebildet sein.

Der Radiallüfter steht vorteilhafterweise mit dem Verbrennungsmotor in Antriebsverbindung. Bei Einsatz eines konventionellen Kühlsystems mit Axiallüfter werden bis zu 10 % der Motorleistung beispielsweise eines Turbodieselmotors eines Lastkraftwagens zum Betreiben des Kühlsystems verbraucht. Dagegen wird zum Betreiben eines wirkungsgradgünstigeren Kühlsystems mit Radiallüfter wesentlich weniger Motorleistung des Verbrennungsmotors abgezweigt, was im Einklang zur Tendenz eines Einsatzes von leistungsstärkeren Verbrennungsmotoren in Kraftfahrzeugen steht. Es ist somit bei Radiallüftern im Vergleich zu Axiallüftern eine geringere Lüfterantriebsleistung aufgrund des besseren Lüfterwirkungsgrads bereitzustellen, wobei zur Erzielung einer bestimmten Kühlleistung beim erfindungsgemäßen Kühlsystem außerdem eine geringere Luftmenge durch den Lüfter durchzusetzen ist, was zu einer höheren verfügbaren Motorleistung des Verbrennungsmotors und zu einem geringeren Kraftstoffverbrauch des Kraftfahrzeugs führt. Der Radiallüfter kann beispielsweise mittels einer Kurbelwelle des Verbrennungsmotors, gegebenenfalls unter Zwischenschaltung eines Zahnradgetriebes oder eines Riementriebs (Hochtrieb), angetrieben werden. Alternativ kann diesbezüglich auch ein separater Elektromotor oder ein Hydrostatantrieb vorgesehen sein.

Mit Vorteil ist der Ladeluftkühler an seiner Ladelufteintrittsseite insbesondere mittels einer Ladeluftleitung mit einem Ladeluft-Turbolader verbunden und steht an seiner Ladeluftaustrittsseite insbesondere mittels einer Ladeluftleitung mit dem Verbrennungsmotor in Verbindung. Ein derartiges, an sich bekanntes Ladeluftzuführsystem kann nun vorzugsweise mit relativ kurzen Ladeluftleitungen versehen werden. Dies ist darauf zurückzuführen, dass die Ladeluftleitungen nicht wie bei konventionellen Kühlsystemen zu einem in Bezug auf den Verbrennungsmotor frontal angeordneten Ladeluftkühler führen, sondern der Ladeluftkühler aufgrund des Einsatzes eines Radiallüfters nun an einer konstruktiv günstigeren (gesamtwirkungsgradgünstigeren) Stelle im Motorraum angeordnet werden kann unter vorteilhafter Ausbildung von verhältnismäßig kurzen Ladeluftleitungen (geringerer Druckverlust) sowie unter entsprechender Reduzierung der aufzubringenden Ladeluftzuführleistung. Ferner ist hierdurch eine verbesserte Motoransprechdynamik erzielbar.

Vorzugsweise ist das Kühlmedium des Ladeluftkühlers und des Kühlmittelkühlers Kühlluft, welche durch eine jeweilige Kühlluftleitung zum Kühlmittelkühler und zum Ladeluftkühler zuführbar ist. Dabei sind die Kühlluftleitungen insbesondere strömungsgünstig ausgebildet, so dass die Verlustleistungen zur Kühlluftzuführung vom Radiallüfter in die Kühlaggregate möglichst gering ausfallen.

Vorteilhafterweise sind kühlluftaustrittsseitig am Kühlmittelkühler und/oder am Ladeluftkühler Kühlluftleitungen zur Kühlluftabfuhr vorgesehen. Somit wird die aus dem Kühlsystem austretende Kühlluft nicht gegen den Motorblock des Verbrennungsmotors geführt, wie es bei Einsatz von Axiallüftern in konventionellen Kraftfahrzeug-Kühlsystemen der Fall ist, sondern kann unter Reduzierung von bei der Kühlluftförderung grundsätzlich nicht erwünschten Verlustleistungen in strömungswiderstandreduzierte Bereiche im Motorraum geleitet werden.

Der Verbrennungsmotor kann ein aufgeladener Ottomotor oder ein Dieselmotor, insbesondere ein Turbodieselmotor, eines Lastkraftwagens oder eines Personenkraftwagens sein.

Zur Lösung der Aufgabe wird ferner ein Kraftfahrzeug mit den Merkmalen des Anspruchs 16 vorgeschlagen.

Weitere vorteilhafte Ausgestaltungen der Erfindung ergeben sich aus der Beschreibung.

Die Erfindung wird nachfolgend in mehreren Ausführungsbeispielen anhand einer zugehörigen Zeichnung näher erläutert. Es zeigen:
- Figur 1: ein Kraftfahrzeug-Kühlsystem anhand eines Blockschaltbildes;
- Figur 2: eine schematische Perspektivdarstellung eines Kraftfahrzeug-Kühlsystems gemäß Figur 1;
- Figur 3: eine schematische, perspektivische Seitenansicht des Kraftfahrzeug-Kühlsystems der Figur 2;
- Figur 4: eine schematische Draufsicht des Kraftfahrzeug-Kühlsystems der Figur 2;
- Figur 5: eine schematische Seitenansicht eines als Gegenstromkühler ausgebildeten Ladeluftkühlers eines erfindungsgemäßen Kraftfahrzeug-Kühlsystems;
- Figur 6: einen Querschnitt durch den Ladeluftkühler der Figur 5 in einer Ladeluftdurchsetzungsebene und
- Figur 7: einen Querschnitt durch den Ladeluftkühler der Figur 5 in einer Kühlluftdurchsetzungsebene.

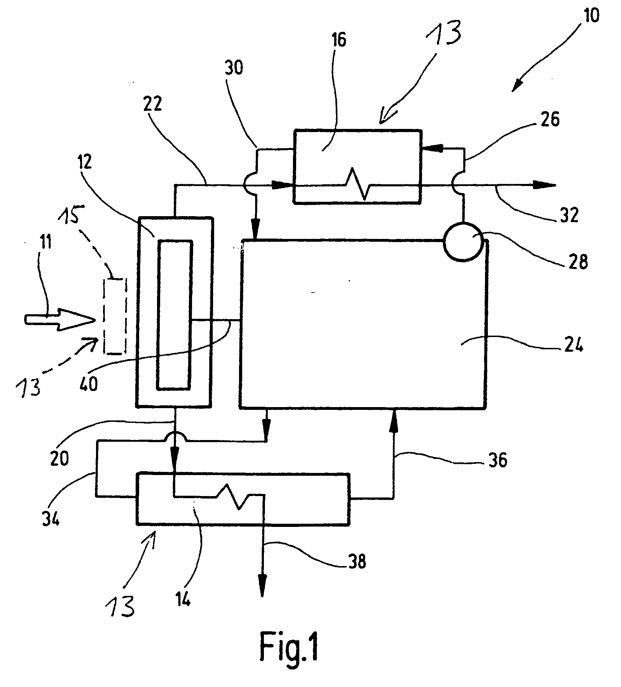

Figur 1 zeigt ein Blockschaltbild eines Kraftfahrzeug-Kühlsystems 10. Das Kühlsystem beziehungsweise die Kühlanordnung 10 enthält einen Lüfter 12, der als Radiallüfter ausgebildet ist und mit einem Verbrennungsmotor 24 mittels einer Welle 40 in Antriebsverbindung steht, das heißt, der Radiallüfter 12 wird vom Verbrennungsmotor 24 angetrieben. Der Radiallüfter 12 saugt entlang einer Ansaugrichtung gemäß Pfeil 11 Kühlluft axial an und teilt sie in zwei radial austretende Kühlluftteilströme auf, wobei ein erster Kühlluftteilstrom durch eine Kühlluftleitung (Pfeil 20) einem ersten Kühler 13, im vorliegenden Ausführungsbeispiel einem Kühlmittelkühler 14, zugeführt wird und der zweite Kühlluftteilstrom durch eine weitere Kühlluftleitung (Pfeil 22) in einen zweiten Kühler 13, gemäß vorliegendem Beispiel in einen Ladeluftkühler 16 geleitet wird. Der Kühlmittelkühler 14 ist Teil eines geschlossenen Kühlmittelkreislaufs, gemäß welchem Kühlmittel vom Verbrennungsmotor 24 durch eine Kühlmittelleitung (Pfeil 34) in den Kühlmittelkühler 14 geführt wird, welcher gleichzeitig mittels des Radiallüfters 12 gemäß Pfeil 20 mit Kühlluft beaufschlagt wird, die den Kühlmittelkühler 14 durchsetzt und aus selbigem gegebenenfalls mittels einer Kühlluftleitung (Pfeil 38) abgeführt wird. Das in dieser Weise gekühlte Kühlmittel wird vom Kühlmittelkühler 14 durch eine Kühlmittelleitung gemäß Pfeil 36 wieder zurück in den Verbrennungsmotor 24 geleitet. Der Ladeluftkühler 16 wird mittels eines Ladeluft-Turboladers 28 und durch eine Ladeluftleitung (Pfeil 26) mit Ladeluft beaufschlagt. Die Ladeluft wird mit vom Radiallüfter 12 durch die Kühlluftleitung gemäß Pfeil 22 zugeführter Kühlluft im Ladeluftkühler 16 gekühlt und anschließend durch eine Ladeluftleitung (Pfeil 30) in den Verbrennungsmotor 24 geleitet. Die den Ladeluftkühler 16 durchsetzende Kühlluft wird vorzugsweise durch eine Kühlluftleitung gemäß Pfeil 32 abgeführt. Der Ladeluftkühler 16 ist als Gegenstromkühler ausgebildet, gegebenenfalls in Form eines Kreuzgegenstromkühlers. Der Kühlmittelkühler 14 kann dabei als Gegenstromkühler, als Kreuzstromkühler oder als Kreuzgegenstromkühler ausgebildet sein. Der Kühlmittelkühler 14 und der Ladeluftkühler 16 sind an der Austrittsseite des Radiallüfters 12 zueinander parallel angeordnet. Dabei sind der Radiallüfter 12 frontal vor dem Verbrennungsmotor 24 (Motorblock) und der Kühlmittelkühler 14 und der Ladeluftkühler 16 an einer jeweiligen lateralen Seite des Verbrennungsmotors 24 angeordnet. Gegebenenfalls kann auch ein weiterer Kühler 13 in Bezug auf den Lüfter 12 in axialer Richtung frontal vor selbigem angeordnet sein (gestrichelt dargestellter Lüfter 15). Der Verbrennungsmotor 24 ist vorzugsweise ein Dieselmotor, insbesondere ein Turbodieselmotor, eines Lastkraftwagens oder eines Personenkraftwagens.

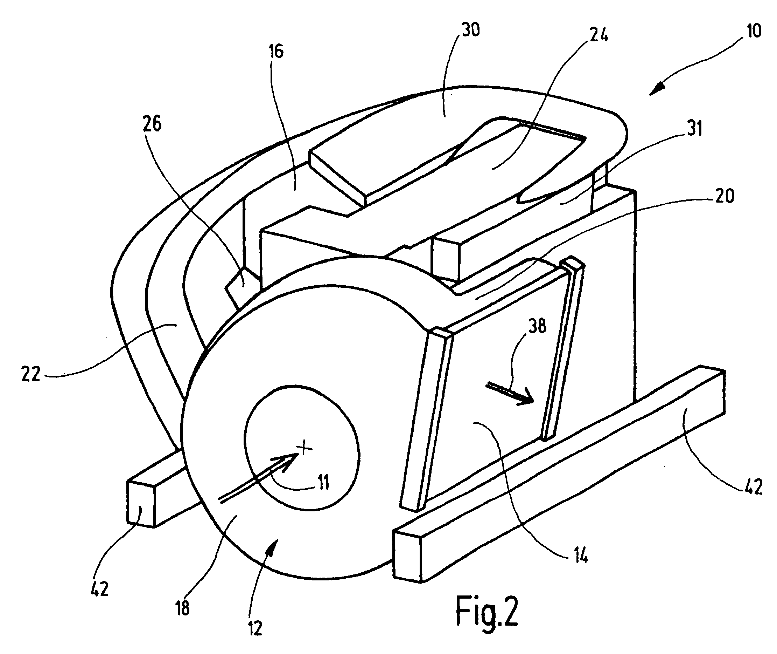

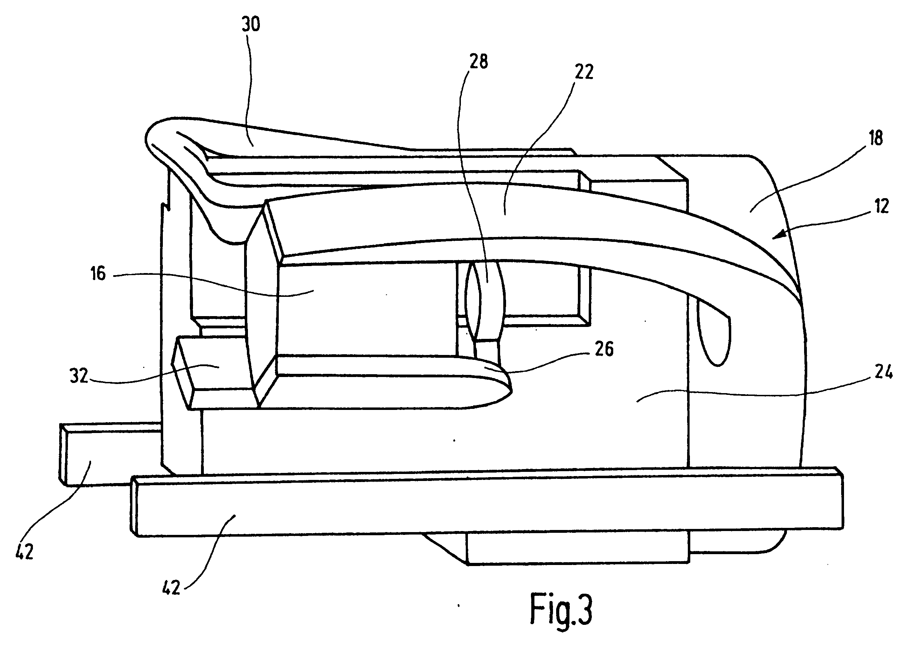

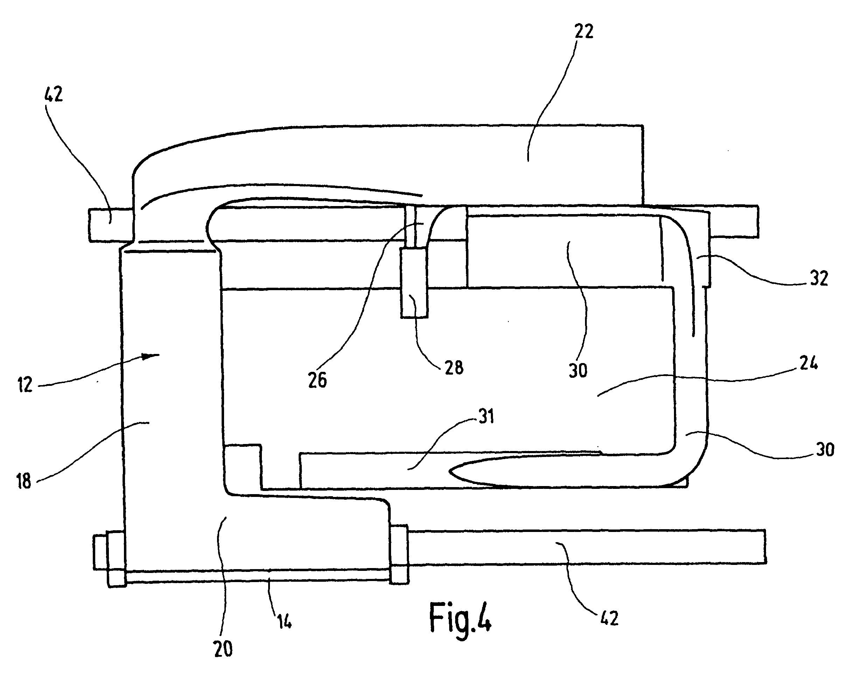

Die Figuren 2 bis 4 zeigen schematische Ansichten eines erfindungsgemäßen Kraftfahrzeug-Kühlsystems 10 entsprechend dem Blockschaltbild der Figur 1. Dabei ist der Radiallüfter 12 mit einem Luftführungsgehäuse 18 versehen, das in diesem Ausführungsbeispiel als Spiralgehäuse ausgebildet ist. Der mit dem Radiallüfter 12 verbundene Kühlmittelkühler 14 ist als Kreuzstromkühler ausgebildet, aus welchem gemäß Pfeil 38 Kühlluft -ohne Einsatz einer selbige abführenden Kühlluftleitung- frei in den lateralen Motorraum (Freiraum) des Kraftfahrzeugs austritt. Die Ladeluftleitung 30 verbindet zur Zuführung der gekühlten Ladeluft in den Verbrennungsmotor 24 den Ladeluftkühler 16 mit einem Luftverteiler 31 des Verbrennungsmotors 24. Die Kühlluftleitungen 20, 22 und die Ladeluftleitungen 26, 30 sind dabei besonders strömungsgünstig (relativ geringer Strömungswiderstand) ausgebildet. Der Verbrennungsmotor 24 (Motorblock) wird mittels an sich bekannter Motorträger 42 lagestabil gehalten. Der weitere konstruktive Aufbau und die Funktionsweise des Kraftfahrzeug-Kühlsystems 10 der Figuren 2 bis 4 entsprechen derjenigen der Figur 1, wobei die Kühlluftleitung 32 (Kühlluftabfuhr aus dem Ladeluftkühler 16) in den Figuren 3 bis 4 andeutungsweise dargestellt ist.

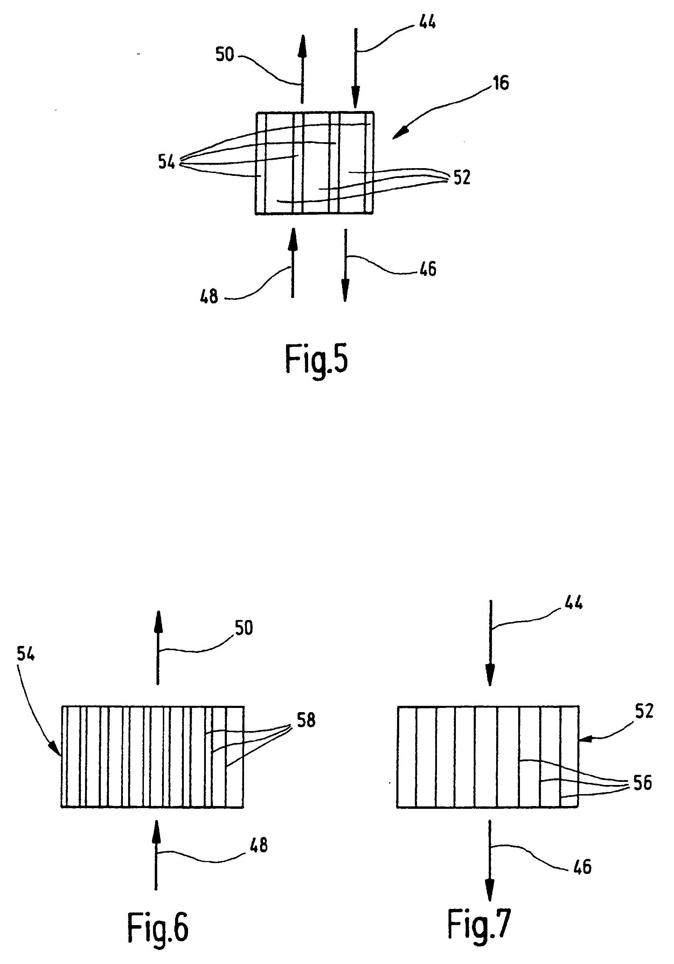

Figur 5 zeigt eine schematische Darstellung eines als Gegenstromkühler ausgebildeten Ladeluftkühlers 16. Dabei wird die Kühlluft beispielsweise bei cirka 25°C gemäß Pfeil 44 dem Ladeluftkühler 16 zugeführt (Kühlluftdurchsetzungsebene 52), in welchem die selbigen durchsetzende Ladeluft (Pfeile 48, 50; Ladeluftdurchsetzungsebene 54) derart gekühlt wird, dass die Kühlluft gemäß Pfeil 46 den Ladeluftkühler 16 bei einer Temperatur zum Beispiel von cirka 200°C verlässt. Dabei weist die gemäß Pfeil 48 in den Ladeluftkühler 16 eintretende Ladeluft üblicherweise eine Betriebstemperatur von bis zu 260°C auf und wird mittels Kühlung durch die Kühlluft (Pfeile 44, 46) auf eine Betriebstemperatur von cirka 40°C gekühlt, mit welcher die Ladeluft dem Luftverteiler 31 und somit dem Verbrennungsmotor 24 zugeführt wird. Der als Gegenstromkühler ausgebildete Ladeluftkühler 16 ist besonders vorteilhaft, da -im Gegensatz zu reinen Kreuzstromkühlern- die Kühlluft bis nahe an die Eintrittstemperatur der Ladeluft aufgeheizt werden kann, wodurch eine grundsätzlich erwünschte gute Ausnutzung der Wärmeaufnahmekapazität der Kühlluft gewährleistet ist. Dabei kann der Ladeluftkühler 16 der Figur 5 gegebenenfalls auch als Kreuzgegenstromkühler ausgebildet sein. In Figur 6 ist ein den Ladeluftkühler 16 entsprechend Figur 5 in einer Ladeluftdurchsetzungsebene 54 gemäß den Pfeilen 48, 50 durchsetzender Ladeluftstrom dargestellt, während Figur 7 eine Kühlluftdurchsetzungsebene 52 des Ladeluftkühlers 16 zeigt, in welchem gemäß den Pfeilen 44, 46 ein Kühlluftstrom den Ladeluftkühler 16 durchsetzt. In den Figuren 6, 7 sind ferner Berippungen 58, 56 in den jeweiligen Durchsetzungsebenen 54, 52 dargestellt.

## Patentansprüche

1. Kraftfahrzeug-Kühlsystem eines Verbrennungsmotors, mit einem Lüfter, dem mindestens ein Kühler zugeordnet ist, wobei der Lüfter als Radiallüfter mit Luftführungsgehäuse ausgebildet ist und das Luftführungsgehäuse ein Spiralgehäuse ist, und wobei mindestens der Kühler ein Kühlmittelkühler für ein Verbrennungsmotor-Kühlmitkel ist, **dadurch gekennzeichnet, dass** mindestens ein zusätzlicher Kühler (13) ein als Gegenstromkühler ausgebildeter Ladeluftkühler (16) ist, und dass der Radiallüfter (12) frontal vor dem Verbrennungsmotor (24) des Kraftfahrzeugs und der Kühlmittelkühler (14) und der Ladeluftkühler (16) an einer jeweiligen lateralen Seite des Verbrennungsmotors (24) angeordnet sind, wobei der Radiallüfter (12) mittels eines jeweiligen Austrittskanals (20,22) mit dem Kühlmittelkühler (14) und mit dem Ladeluftkühler (16) verbunden ist.

2. Kühlsystem nach Anspruch 1, **dadurch gekennzeichnet, dass** mindestens ein Kühler (13) ein Ölkühler ist.

3. Kühlsystem nach einem der vorhergehenden Ansprüche, **dadurch gekennzeichnet, dass** mindestens ein Kühler (13) ein Kondensator einer Klimaanlage ist.

4. Kühlsystem nach einem der vorhergehenden Ansprüche, **dadurch gekennzeichnet, dass** mindestens zwei Kühler (13) zueinander in Reihe geschaltet sind unter Zwischenschaltung des Radiallüfters (12).

5. Kühlsystem nach einem der vorhergehenden Ansprüche, **dadurch gekennzeichnet, dass** mindestens zwei Kühler (13) zueinander parallel geschaltet sind.

6. Kühlsystem nach einem der vorhergehenden Ansprüche, **dadurch gekennzeichnet, dass** mindestens ein Kühler (13), insbesondere der Kühlmittelkühler (14), an der Austrittsseite (20,22) des Radiallüfters (12) angeordnet ist.

7. Kühlsystem nach einem der vorhergehenden Ansprüche, **dadurch gekennzeichnet, dass** mindestens ein Kühler (13) lateral oder oberhalb oder unterhalb des Verbrennungsmotors (24) eines Kraftfahrzeugs einsetzbar ist.

8. Kühlsystem nach einem der vorhergehenden Ansprüche, **dadurch gekennzeichnet, dass** der Kühlmittelkühler (14) und der Ladeluftkühler (16) zueinander parallel geschaltet an der Austrittsseite (20,22) des Radiallüfters (12) angeordnet sind.

9. Kühlsystem nach einem der vorhergehenden Ansprüche, **dadurch gekennzeichnet, dass** der Kühlmittelkühler (14) als Gegenstromkühler, als Kreuzstromkühler oder als Kreuzgegenstromkühler ausgebildet ist.

10. Kühlsystem nach einem der vorhergehenden Ansprüche, **dadurch gekennzeichnet, dass** der Ladeluftkühler (16) als Kreuzgegenstromkühler ausgebildet ist.

11. Kühlsystem nach einem der vorhergehenden Ansprüche, **dadurch gekennzeichnet, dass** der Radiallüfter (12) mit dem Verbrennungsmotor (24) in Antriebsverbindung bringbar ist.

12. Kühlsystem nach einem der vorhergehenden Ansprüche, **dadurch gekennzeichnet, dass** der Ladeluftkühler (16) an seiner Ladelufteintrittseite insbesondere mittels einer Ladeluftleitung (26) mit einem Ladeluft-Turbolader (28) verbunden ist und an seiner Ladeluftaustrittsseite insbesondere mittels einer Ladeluftleitung (30) mit dem Verbrennungsmotor (24) in Verbindung steht.

13. Kühlsystem nach einem der vorhergehenden Ansprüche, **dadurch gekennzeichnet, dass** das Kühlmedium des Ladeluftkühlers (16) und des Kühlmittelkühlers (14) Kühlluft ist, welche durch eine jeweilige Kühlluftleitung (20,22) zum Kühlmittelkühler (14) und zum Ladeluftkühler (16) zuführbar ist.

14. Kühlsystem nach einem der vorhergehenden Ansprüche, **dadurch gekennzeichnet, dass** kühlluftaustrittsseitig am Kühlmittelkühler (14) und/oder am Ladeluftkühler (16) Kohlluftleitungen (38,32) zur Kühlluftabfuhr vorgesehen sind.

15. Kühlsystem nach einem der vorhergehenden Ansprüche, **dadurch gekennzeichnet, dass** der Verbrennungsmotor (24) ein Dieselmotor, insbesondere ein Turbodieselmotor, eines Lastkraftwagens oder eines Personenkraftwagens ist.

16. Kraftfahrzeug mit einem Kühlsystem nach einem der vorhergehenden Ansprüche.

## Claims

1. Motor vehicle cooling system of an internal combustion engine, having a fan, with which at least one cooler is associated, wherein the fan is designed as a radial fan with air guide housing and the air guide housing is a spiral housing, and wherein at least the cooler is a coolant cooler for an internal combustion engine coolant, **characterized in that** at least one additional cooler (13) is a charging air cooler (16) in the form of a countercurrent cooler, and that the radial fan (12) is disposed at the front of the internal combustion engine (24) of the motor vehicle and the coolant cooler (14) and the charging air cooler (16) are disposed at a respective lateral side of the internal combustion engine (24), wherein the radial fan (12) is connected to the coolant cooler (14) and to the charging air cooler (16) by means of a respective outlet channel (20, 22).

2. Cooling system according to claim 1, **characterized in that** at least one cooler (13) is an oil cooler.

3. Cooling system according to one of the preceding claims, **characterized in that** at least one cooler (13) is a condenser of an air-conditioning system.

4. Cooling system according to one of the preceding claims, **characterized in that** at least two coolers (13) are connected in series to one another with the radial fan (12) inserted therebetween.

5. Cooling system according to one of the preceding claims, **characterized in that** at least two coolers (13) are connected in parallel to one another.

6. Cooling system according to one of the preceding claims, **characterized in that** at least one cooler (13), in particular the coolant cooler (14), is disposed at the outlet side (20, 22) of the radial fan (12).

7. Cooling system according to one of the preceding claims, **characterized in that** at least one cooler (13) is deployable laterally of or above or below the internal combustion engine (24) of a motor vehicle.

8. Cooling system according to one of the preceding claims, **characterized in that** the coolant cooler (14) and the charging air cooler (16) are connected in parallel to one another and disposed at the outlet side (20, 22) of the radial fan (12).

9. Cooling system according to one of the preceding claims, **characterized in that** the coolant cooler (14) is designed as a countercurrent cooler, a crossflow cooler or a cross-counterflow cooler.

10. Cooling system according to one of the preceding claims, **characterized in that** the charging air cooler (16) is designed as a cross-counterflow cooler.

11. Cooling system according to one of the preceding claims, **characterized in that** the radial fan (12) may be brought into drive connection with the internal combustion engine (24).

12. Cooling system according to one of the preceding claims, **characterized in that** the charging air cooler (16) at its charging air inlet side is connected in particular by means of a charging air line (26) to a charging air turbo-charger (28) and at its charging air outlet side communicates in particular by means of a charging air line (30) with the internal combustion engine (24).

13. Cooling system according to one of the preceding claims, **characterized in that** the coolant of the charging air cooler (16) and of the coolant cooler (14) is cooling air, which is feedable to the coolant cooler (14) and to the charging air cooler (16) through a respective cooling air line (20, 22).

14. Cooling system according to one of the preceding claims, **characterized in that** cooling air lines (38, 32) for the removal of cooling air are provided at the cooling-air outlet side of the coolant cooler (14) and/or of the charging air cooler (16).

15. Cooling system according to one of the preceding claims, **characterized in that** the internal combustion engine (24) is a diesel engine, in particular a turbo-charged diesel engine, of a lorry or a passenger car.

16. Motor vehicle having a cooling system according to one of the preceding claims.

## Revendications

1. Système de refroidissement d'un moteur à combustion interne de véhicule automobile, comportant un ventilateur auquel est associé au moins un refroidisseur, le ventilateur étant réalisé sous la forme de ventilateur radial avec carter de canalisation d'air et le carter de déflection d'air étant un carter en spirale, et au moins le refroidisseur étant un refroidisseur de fluide de refroidissement pour un fluide de refroidissement de moteur à combustion interne, **caractérisé en ce qu'**au moins un refroidisseur supplémentaire (13) est un refroidisseur d'air de suralimentation (16) réalisé sous la forme de refroidisseur à contre-courant et **en ce que** le ventilateur radial (12) est disposé frontalement devant le moteur à combustion interne (24) du véhicule automobile et le refroidisseur de fluide de refroidissement (14) et le refroidisseur d'air de suralimentation (16) sont disposés chacun sur un côté latéral du moteur à combustion interne (24), le ventilateur radial (12) étant relié au refroidisseur de fluide de refroidissement (14) et au refroidisseur d'air de suralimentation (16) au moyen d'un canal de sortie respectif (20, 22).

2. Système de refroidissement selon la revendication 1, **caractérisé en ce qu'**au moins un refroidisseur (13) est un refroidisseur d'huile.

3. Système de refroidissement selon l'une quelconque des revendications précédentes, **caractérisé en ce qu'**au moins un refroidisseur (13) est un condenseur d'une installation de climatisation.

4. Système de refroidissement selon l'une quelconque des revendications précédentes, **caractérisé en ce qu'**au moins deux refroidisseurs (13) sont montés en série l'un avec l'autre, le ventilateur radial (12) étant intercalé entre eux.

5. Système de refroidissement selon l'une quelconque des revendications précédentes, **caractérisé en ce qu'**au moins deux refroidisseurs (13) sont montés en parallèle l'un avec l'autre.

6. Système de refroidissement selon l'une quelconque des revendications précédentes, **caractérisé en ce qu'**au moins un refroidisseur (13), en particulier le refroidisseur de fluide de refroidissement (14), est disposé du côté sortie (20, 22) du ventilateur radial (12).

7. Système de refroidissement selon l'une quelconque des revendications précédentes, **caractérisé en ce qu'**au moins un refroidisseur (13) peut être utilisé latéralement ou au-dessus ou au-dessous du moteur à combustion interne (24) d'un véhicule automobile.

8. Système de refroidissement selon l'une quelconque des revendications précédentes, **caractérisé en ce que** le refroidisseur de fluide de refroidissement (14) et le refroidisseur d'air de suralimentation (16) sont montés en parallèle l'un avec l'autre et sont disposés du côté sortie (20, 22) du ventilateur radial (12).

9. Système de refroidissement selon l'une quelconque des revendications précédentes, **caractérisé en ce que** le refroidisseur de fluide de refroidissement (14) est réalisé sous la forme de refroidisseur à contre-courant, refroidisseur à courant croisé ou refroidisseur à contre-courant croisé.

10. Système de refroidissement selon l'une quelconque des revendications précédentes, **caractérisé en ce que** le refroidisseur d'air de suralimentation (16) est réalisé sous la forme de refroidisseur à contre-courant croisé.

11. Système de refroidissement selon l'une quelconque des revendications précédentes, **caractérisé en ce que** le ventilateur radial (12) peut être amené en liaison d'entraînement avec le moteur à combustion interne (24).

12. Système de refroidissement selon l'une quelconque des revendications précédentes, **caractérisé en ce que** le refroidisseur d'air de suralimentation (16) est relié, de son côté entrée d'air de suralimentation, à un turbocompresseur d'air de suralimentation (28), en particulier au moyen d'un conduit d'air de suralimentation (26), et est en liaison, de son côté sortie d'air de suralimentation, avec le moteur à combustion interne (24), en particulier au moyen d'un conduit d'air de suralimentation (30).

13. Système de refroidissement selon l'une quelconque des revendications précédentes, **caractérisé en ce que** le fluide de refroidissement du refroidisseur d'air de suralimentation (16) et du refroidisseur de fluide de refroidissement (14) est de l'air de refroidissement qui peut être amené au refroidisseur de fluide de refroidissement (14) et au refroidisseur d'air de suralimentation (16) par un conduit d'air de refroidissement respectif (20, 22).

14. Système de refroidissement selon l'une quelconque des revendications précédentes, **caractérisé en ce qu'**il est prévu, pour l'évacuation d'air de refroidissement, des conduits d'air de refroidissement (38, 32) côté sortie d'air de refroidissement, sur le refroidisseur de fluide de refroidissement (14) et/ou sur le refroidisseur d'air de suralimentation (16).

15. Système de refroidissement selon l'une quelconque des revendications précédentes, **caractérisé en ce que** le moteur à combustion interne (24) est un moteur diesel, en particulier un turbomoteur diesel, d'un camion ou d'une voiture particulière.

16. Véhicule automobile comportant un système de refroidissement selon l'une quelconque des revendications précédentes.
